# EUROPÄISCHE PATENTSCHRIFT

(11) **EP 1 470 013 B1**
(45) Veröffentlichungstag und Bekanntmachung des Hinweises auf die Patenterteilung: **29.06.2005**
(21) Anmeldenummer: 03734651.7
(22) Anmeldetag: 30.01.2003
(51) Int. Cl.: B60K 1/02, B60K 17/04

(54) **DIREKT ANGETRIEBENE ANTRIEBSACHSE MIT ZWEI ANTRIEBSMOTOREN**
DIRECTLY DRIVEN DRIVING AXLE WITH TWO DRIVE MOTORS
ESSIEU MOTEUR A ENTRAINEMENT DIRECT DOTE DE DEUX MOTEURS D'ENTRAINEMENT

(30) Priorität: 31.01.2002 DE 20201379 U; 02.09.2002 DE 20213670 U
(43) Veröffentlichungstag der Anmeldung: 27.10.2004
(73) Patentinhaber: Ewald Speth Antriebstechnik GmbH, 42327 Wuppertal (DE)
(72) Erfinder: KEUTH, Karl-Heinz, 58553 Halver (DE)
(74) Vertreter: Müller, Karl-Ernst, Dr., Dipl.-Ing.
(86) Internationale Anmeldenummer: PCT/DE2003/000253
(87) Internationale Veröffentlichungsnummer: WO 2003/064198

(56) Entgegenhaltungen:
- DE-A- 3 725 620
- DE-A- 19 534 383
- DE-A- 19 732 637
- DE-C- 579 353
- DE-C- 4 421 428
- DE-U- 20 010 563

## Beschreibung

Die Erfindung betrifft eine Antriebsachse für elektromotorisch angetriebene Fahrzeuge mit einem an der Achse angeordneten Elektromotor und mit von dessen Motorwelle unter Zwischenschaltung von Planetengetriebestufen angetriebenen Antriebswellen, welche unter jeweiliger Zwischenschaltung einer Bremsvorrichtung sowie eines weiteren Planetengetriebes mit den die auf der Antriebsachse sitzenden Räder tragenden Abtriebswellen verbunden sind.

Eine Antriebsachse mit den vorgenannten Merkmalen ist aus der DE 200 10 563 U1 bekannt. Bei der bekannten Achse ist als Antrieb für beide, die auf der Achse sitzenden Räder antreibenden Antriebs- bzw. die daran unter Zwischenschaltung einer Bremsanordnung und eines Planetengetriebes gekoppelten Abtriebswellen ein einziger Drehstrommotor vorgesehen, dessen eine Motorwelle unter Zwischenschaltung eines Differentialgetriebes mit den beiden Antriebswellen verbunden ist, wobei eine der beiden Antriebswellen durch eine in der Motorwelle ausgebildete Bohrung auf die der Motorwelle gegenüberliegende Seite des Drehstrommotors geführt ist. Bei der bekannten Achse ist zwischen Motorwelle und den beiden Antriebswellen eine eine Getriebestufe und das notwendige Differential in einer besonderen konstruktiven Ausgestaltung in einer Baueinheit zusammenfassende Planeten-Differential-Getriebestufe eingeschaltet.

Mit der bekannten Antriebsachse ist der Nachteil verbunden, dass das aufgrund des Antriebskonzepts mit einem einzigen Drehstrommotor erforderliche Differential trotz der in der DE 200 10 563 U 1 vorgeschlagenen Lösung die Leistung der Antriebsachse in Drehmoment und Endgeschwindigkeit der angetriebenen Räder beschränkt und zudem beim Betrieb der Achse hohe Laufgeräusche verursacht. Die in einer Baueinheit zusammengefasste Planeten-Differential-Getriebestufe ist zudem in Auslegung und Herstellung aufwendig. Es kommt hinzu, dass wegen des Verzichts auf eine Differentialsperre bei Verlust der Bodenhaftung eines Rades das Fahrzeug zum Stillstand kommt. Soweit dieser Nachteil durch den zusätzlichen Einbau einer Differentialsperre zu vermeiden ist, bedeutet diese Differentialsperre einen weiteren Herstellungs- und Montageaufwand, somit eine Erhöhung der Kosten. Außerdem wird die Baugröße der Antriebsachse insgesamt erhöht.

Der Erfindung liegt daher die Aufgabe zugrunde, bei einer Antriebsachse mit den gattungsgemäßen Merkmalen die vorgenannten Nachteile zu vermeiden.

Die Lösung dieser Aufgabe ergibt sich einschließlich vorteilhafter Ausgestaltungen und Weiterbildungen der Erfindung aus dem Inhalt der Schutzansprüche, welche dieser Beschreibung nachgestellt sind.

Die Erfindung sieht in ihrem Grundgedanken die Merkmale gemäß Anspruch 1 vor. Mit der Erfindung ist der Vorteil verbunden, dass aufgrund des Wegfalls des Differentials die damit entstehenden Laufgeräusche vermindert sind, wobei auch eine Vereinfachung und Standardisierung der Bauform bzw. der erforderlichen Einzelteile für die Antriebsachse gegeben ist. Auch wenn eines der getrennt angetriebenen Räder die Bodenhaftung verliert, bewegt sich das mit der Antriebsachse ausgerüstete Fahrzeug mit halber Leistung weiter, weil das in Bodenhaftung verbleibende Rad weiterhin von dem ihm zugeordneten Antriebsmotor unmittelbar angetrieben wird. Aufgrund der unmittelbaren Kopplung der zwischen der Antriebswelle und der Motorwelle vorgesehenen Planetengetriebestufe mit der Motorwelle einerseits und der Antriebswelle andererseits ergibt sich eine größere Freiheit in der konstruktiven Auslegung des Übersetzungsverhältnisses dieser Getriebestufe; damit ist ein höheres Abtriebsdrehmoment bzw. eine höhere Endgeschwindigkeit erreichbar. Damit ergibt sich der weitere Vorteil, dass bei einer Beibehaltung des Abtriebsdrehmomentes in dem im Stand der Technik vorgegebenen Rahmen größere Radhalbmesser eingesetzt werden können, womit die von der Antriebsachse angetriebenen Fahrzeuge eine größere Bodenfreiheit aufweisen.

Soweit nach einem Ausführungsbeispiel der Erfindung zunächst eine einstufige Auslegung der zwischen Motorwelle und Antriebswelle ausgebildeten Planetengetriebestufe vorgeschlagen ist, sieht die Erfindung insbesondere eine mehrstufige Auslegung der Planetengetriebestufe vor. Damit lässt sich ein hohes Gesamtübersetzungsverhältnis von bis zu 1 : 35 erreichen, womit Motordrehzahlen von bis zu
7000 l/min ermöglicht sind, während nach dem Stand der Technik etwa
4500 l/min Standard sind.

Soweit nach einem Ausführungsbeispiel der Erfindung vorgesehen ist, dass das Getriebegehäuse der zwischen Motorwelle und Antriebswelle angeordneten Planetengetriebestufe im Inneren des Gehäuses des Asynchronmotors angeordnet ist und die Lager für die Motorwelle trägt, ergibt sich daraus insbesondere die Möglichkeit, die Schmierung der Lager der Motorwelle durch die Ölschmierung der Planetengetriebestufe vorzunehmen, womit eine weitere Geräuschreduzierung verbunden ist und die Öltemperatur der Schmierung niedrig gehalten werden kann. Insbesondere mit der dadurch gegebenen Ölschmierung ist wiederum eine hohe Motordrehzahl erreichbar.

Alternativ kann auch vorgesehen sein, für die Schmierung der Lager der Motorwelle ein fettgeschmiertes Lager einzusetzen, wobei derartige Lager heute auch schon Drehzahlen bis zu 6000 l/min zulassen; allerdings sind derartige Speziallager aufwendig.

Die Bauform der erfindungsgemäßen Antriebsachse wird in zweckmäßiger Weise dadurch vereinfacht, wenn nach einem Ausführungsbeispiel der Erfindung ein gemeinsames Gehäuse für beide Asynchronmotoren vorgesehen ist.

Soweit das auf der Motorwelle als Teil des Planetengetriebes angeordnete Sonnenritzel auch axialen Kräften ausgesetzt ist, die in einer nachteiligen Weise eine axiale Verschiebung des Sonnenritzels auf der Motorwelle zur Folge haben können, ist nach einem Ausführungsbeispiel der Erfindung vorgesehen, dass die Lager für die Motorwelle als radiale und axiale Kräfte aufnehmende Lager ausgebildet sind und zwischen den Lagern und einem auf der Motorwelle angeordneten Sonnenritzel als Teil der Planetengetriebestufe eine sich beidseitig gegen die Lager und das Sonnenritzel abstützende Buchse angeordnet ist und das Sonnenritzel über ein an dem freien Ende der Motorwelle befindliches Befestigungsmittel gegen die Buchse festgelegt ist, und dass das Sonnenritzel und die damit kämmenden Planetenräder als Schrägverzahnung mit einer in Richtung der Lager wirkenden Kraftkomponente ausgebildet sind. Hiermit ist der Vorteil verbunden, dass aufgrund der Zwischenschaltung der Buchse zwischen Sonnenritzel und Lagern für die Motorwelle das Sonnenritzel auf der Motorwelle gegen Verschiebung festgelegt ist. Auf das Sonnenritzel einwirkende axiale Kräfte werden nun mit konstruktiver Ausrichtung über die Buchse auf die Lager für die Motorwelle übertragen, die zu diesem Zweck mit einer Bauform ausgelegt sind, die neben der Aufnahme der bei der Lagerung der Motorwelle aufzunehmenden radialen Kräfte zusätzlich zur Aufnahme von axialen Kräften geeignet sind. Da weiterhin vorgesehen ist, dass das Sonnenritzel und die damit kämmenden Planetenräder der Planetengetriebestufe als Schrägverzahnung mit einer in Richtung der Lager für die Motorwelle wirkenden Kraftkomponente ausgebildet sind, lassen sich auftretende axiale Kräfte zielgerichtet in die Lager ableiten.

Nach einem Ausführungsbeispiel der Erfindung ist vorgesehen, dass sich das Sonnenritzel unmittelbar an der Buchse abstützt; alternativ kann eine mittelbare Abstützung des Sonnenritzels gegen die Buchse vorgesehen sein, indem zwischen Buchse und Sonnenritzel eine Zwischenscheibe angeordnet ist.

Zur Festlegung des Sonnenritzels ist nach einem Ausführungsbeispiel der Erfindung vorgesehen, dass das Befestigungsmittel das Sonnenritzel mit Vorspannung gegen die Buchse festlegt; dies setzt eine entsprechende Bauform der Lager für die Motorwelle voraus. Vorzugsweise ist jedoch vorgesehen, dass das Sonnenritzel zwischen der Buchse und dem Befestigungsmittel mit einem geringen Axialspiel angeordnet ist.

In der Zeichnung sind Ausführungsbeispiele der Erfindung wiedergegeben, welche nachstehend beschrieben sind. Es zeigen:

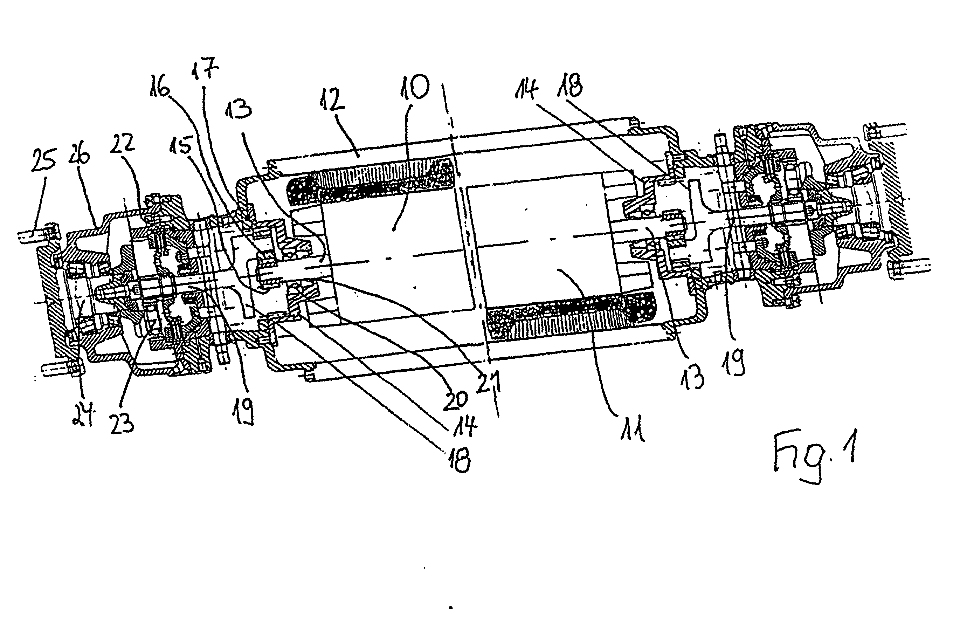

- Fig. 1: eine Antriebsachse in einer geschnittenen Seitenansicht,
- Fig. 2: die zwischen Motorwelle und Antriebswelle angeordnete Planetengetriebestufe in einer vergrößerten Einzeldarstellung.
- Fig. 3: den Gegenstand der Fig. 2 in einem anderen Ausführungsbeispiel mit einem gegen axiale Verschiebung festgelegten Sonnenritzel.

In einem mit dem Chassis des Fahrzeuges verbundenen gemeinsamen Gehäuse 12 sind getrennt voneinander zwei Asynchronmotoren 10, 11 angeordnet, von denen jeder Motor 10, 11 über eine noch zu beschreibende Antriebsanordnung ein einzelnes, auf der Antriebsachse sitzendes Rad antreibt. Die beiden Asynchronmotoren 10, 11 werden in ihrem Arbeitsverhalten über eine gemeinsame Steuerung gesteuert, wobei beispielsweise bei Kurvenfahrten auftretende Drehzahldifferenzen an den Rädern durch die Steuerung ausgeglichen werden.

Die Motorwelle 13 jedes einzelnen Asynchronmotors 10, 11 reicht in ein Getriebegehäuse 14 der zur Verbindung der Motorwelle 13 mit der nachgeschalteten Antriebswelle 19 angeordneten Planetengetriebestufe, die aus einem auf der Motorwelle 13 sitzenden Sonnenritzel 15, aus auf einem Planetenträger 18 sitzenden Planetenrädern 16 sowie einer an der Innenseite des Getriebegehäuses 14 ausgebildeten Hohlradverzahnung 17 besteht. Der Planetenträger 18 ist seinerseits mit der Antriebswelle 19 verbunden, der eine Federspeicher-Lamellenbremse-Baugruppe 22 zugeordnet ist. An die Federspeicher-Lamellenbremse-Baugruppe 22 schließt ein einstufiges Planetengetriebe 23 an, welches die Drehzahl der Antriebswelle 19 in eine Drehung einer angeschlossenen Abtriebswelle 24 untersetzt, wobei die Abtriebswelle 24 Radbolzen 25 zum Ansetzen der Radfelgen aufweist. Die Baugruppen 22, 23 sind von einem Achsrohr 26 als Gehäuseteil umschlossen.

Die Ausbildung von Federspeicher-Lamellenbremsen-Baugruppe 22 wie auch des Planetengetriebes 23 mit Abtriebswelle 24 kann gegenüber dem Stand der Technik unverändert belassen sein.

Die Verbindung der jeweils einzelnen Motorwelle 13 der beiden Asynchronmotoren 10, 11 mit der Antriebswelle 19 in der Planetengetriebestufe 15, 16, 17 gibt die Möglichkeit, die Lagerung der Motorwelle 13 und damit deren Schmierung in die Getriebestufe einzubeziehen. So weist das im Inneren des gemeinsamen Gehäuses 12 der beiden Asynchronmotoren 10, 11 angeordnete Getriebegehäuse 14 das Lager 20 für die Motorwelle 13 auf, wobei zwischen Motorwelle 13 und Getriebegehäuse 14 weiterhin eine Dichtung 21 angeordnet ist. Somit steht die im Getriebegehäuse 14 anstehende Ölschmierung auch für die Schmierung der Lagerung der Motorwelle 13 zur Verfügung.

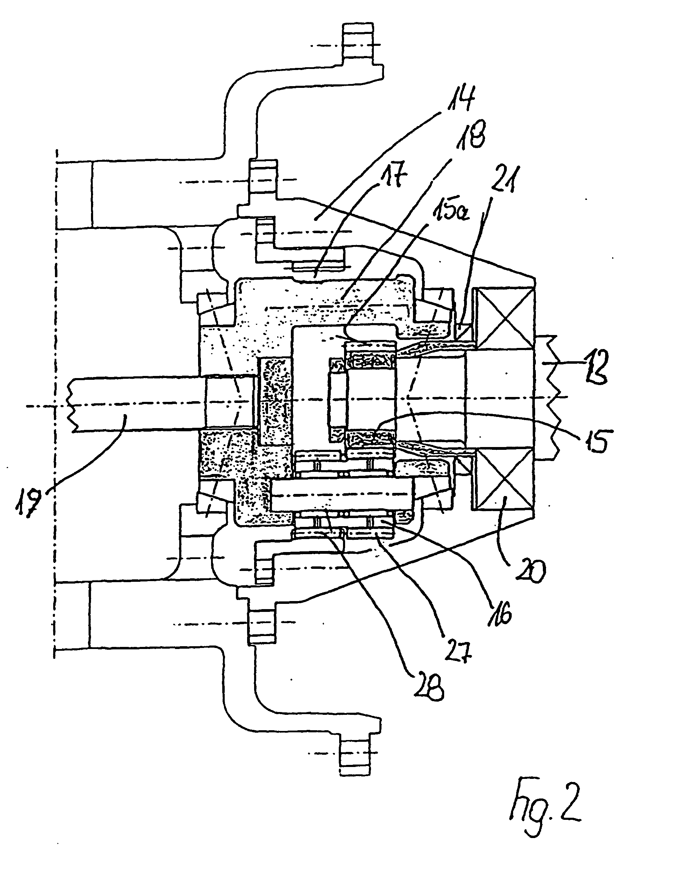

Wie aus Figur 2 näher ersichtlich ist, ist die zwischen Motorwelle 13 und Antriebswelle 19 vorgesehene Planetengetriebestufe als zweistufiges Planetengetriebe ausgebildet, wobei die von dem auf der Motorwelle 13 sitzenden Sonnenritzel 15 mit Verzahnung 15a angetriebenen Planetenräder 16 zwei Verzahnungsbereiche mit unterschiedlicher Zähnezahl aufweisen, nämlich einen ersten mit der Sonnenritzelverzahnung 15a kämmenden Verzahnungsbereich 27 und einen zweiten, mit der Hohlradverzahnung 17 kämmenden Verzahnungsbereich 28. Aufgrund des Abwälzens des zweiten Verzahnungsbereichs 28 an der Hohlradverzahnung 17 wird der Planetenträger 18 mit der daran angeschlossenen Antriebswelle 19 mit entsprechender Untersetzung gegenüber der Motorwelle 12 in Drehung versetzt.

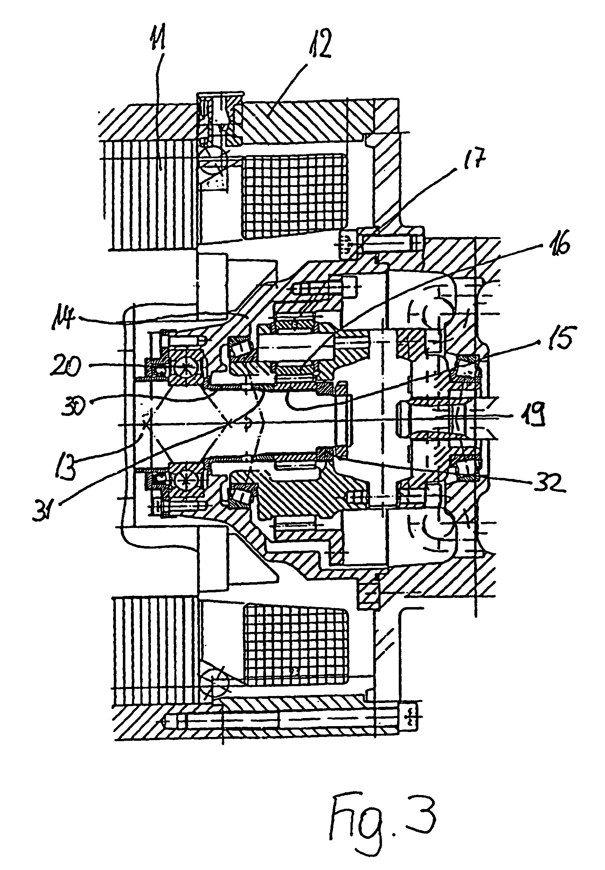

Soweit bei dem in Fig. 3 dargestellten Ausführungsbeispiel ein Festsetzen des Sonnenritzels 15 vorgesehen ist, sind die Lager 20 für die Motorwelle 13 in ihrer Bauform so eingerichtet, dass neben den für die Motorwellenlagerung aufzunehmenden radialen Kräften auch axiale Kräfte aufgenommen und über das Getriebegehäuse 14 in das Achsengehäuse abgeleitet werden können. Zwischen den Lagern 20 und dem Sonnenritzel 15 sind eine Buchse 30 sowie eine Zwischenscheibe 31 auf der Motorwelle 13 angeordnet, die eine axiale Abstützung für das an die Zwischenscheibe 31 anschließende Sonnenritzel 15 bilden; das Sonnenritzel 15 ist auf der Motorwelle 13 durch eine auf dem freien Ende der Motorwelle 13 aufgeschraubte Mutter als Befestigungsmittel 32 festgelegt. Bei dem dargestellten Ausführungsbeispiel ist das Sonnenritzel 15 zwischen seiner axialen Abstützung gegen die Zwischenscheibe 31 und der Befestigungsmutter 32 mit einem geringen axialen Spiel angeordnet. Soweit also axiale Kräfte auf das Sonnenritzel 15 einwirken, werden diese axialen Kräfte von der das Sonnenritzel 15 gegen die Lager 20 für die Motorwelle 13 abstützenden Buchse 30 mit Zwischenscheibe 31 auf die Lager 20 übertragen und hier in das Getriebegehäuse 14 bzw. das Achsengehäuse abgeleitet.

Die in der vorstehenden Beschreibung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein, vorausgesetzt sie verbleiben im Rahmen der Patentansprüche.

## Patentansprüche

1. Antriebsachse für elektromotorisch angetriebene Fahrzeuge mit einem an der Achse angeordneten Elektromotor und mit von dessen Motorwelle (13) unter Zwischenschaltung von Planetengetriebestufen angetriebenen Antriebswellen (19), welche unter jeweiliger Zwischenschaltung einer Bremsvorrichtung (22) sowie eines weiteren Planetengetriebes (23) mit den die auf der Antriebsachse sitzenden Räder tragenden Abtriebswellen (24) verbunden sind, **dadurch gekennzeichnet, dass** an der Achse zwei getrennt arbeitende und über eine gemeinsame Steuerung in ihrem Arbeitsverhalten gesteuerte Asynchronmotoren (10, 11) mit jeweils zugeordneter Motorwelle (13) angeordnet sind, wobei jede Motorwelle (13) jeweils über eine eigene Planetengetriebestufe (15, 16, 17) mit der die nachgeschaltete Abtriebswelle (24) antreibenden Antriebswelle (19) verbunden ist.

2. Antriebsachse nach Anspruch 1, **dadurch gekennzeichnet, dass** jede zwischen Motorwelle (13) und Antriebswelle (19) angeordnete Planetengetriebestufe (15, 16, 17) einstufig ausgelegt ist.

3. Antriebsachse nach Anspruch 1, **dadurch gekennzeichnet, dass** jede zwischen Motorwelle (13) und Antriebswelle (19) angeordnete Planetengetriebestufe (15, 16, 17) mehrstufig ausgelegt ist.

4. Antriebsachse nach einem der Ansprüche 1 bis 3, **dadurch gekennzeichnet, dass** das Getriebegehäuse (14) jeder zwischen Motorwelle (13) und Antriebswelle (19) angeordneten Planetengetriebestufe (15, 16, 17) im Inneren des Gehäuses (12) des Asynchronmotors (10, 11) angeordnet ist und die Lager (20) für die Motorwelle (13) trägt.

5. Antriebsachse nach Anspruch 4, **dadurch gekennzeichnet, dass** die Lager (20) für die Motorwelle (13) als radiale und axiale Kräfte aufnehmende Lager ausgebildet sind und zwischen den Lagern (20) und einem auf der Motorwelle (13) angeordneten Sonnenritzel (15) als Teil der Planetengetriebestufe eine sich beidseitig gegen die Lager (20) und das Sonnenritzel (15) abstützende Buchse (30) angeordnet ist und das Sonnenritzel (15) über ein an dem freien Ende der Motorwelle (13) befindliches Befestigungsmittel (32) gegen die Buchse (30) festgelegt ist, und dass das Sonnenritzel (15) und die damit kämmenden Planetenräder (16) mit Schrägverzahnung mit einer in Richtung der Lager (20) wirkenden Kraftkomponente ausgebildet sind.

6. Antriebsachse nach Anspruch 5, **dadurch gekennzeichnet, dass** sich das Sonnenritzel (15) unmittelbar an der Buchse (30) abstützt.

7. Antriebsachse nach Anspruch 5, **dadurch gekennzeichnet, dass** zwischen Buchse (30) und Sonnenritzel (15) eine Zwischenscheibe (31) angeordnet ist.

8. Antriebsachse nach einem der Ansprüche 5 bis 7, **dadurch gekennzeichnet, dass** das Befestigungsmittel (32) das Sonnenritzel (15) mit Vorspannung gegen die Buchse (30) festlegt.

9. Antriebsachse nach einem der Ansprüche 5 bis 7, **dadurch gekennzeichnet, dass** das Sonnenritzel (15) zwischen der Buchse (30) und dem Befestigungsmittel (32) mit einem geringen Axialspiel angeordnet ist.

10. Antriebsachse nach einem der Ansprüche 1 bis 9, **dadurch gekennzeichnet, dass** die Schmierung des Lagers (20) der Motorwelle (13) durch die Ölschmierung der Planetengetriebestufe (15, 16, 17) gebildet ist.

11. Antriebsachse nach einem der Ansprüche 1 bis 9, **dadurch gekennzeichnet, dass** das Lager (20) der Motorwelle (13) ein fettgeschmiertes Lager ist.

12. Antriebsachse nach einem der Ansprüche 1 bis 11, **dadurch gekennzeichnet, dass** beide Asynchronmotoren (10, 11) in einem gemeinsamen Gehäuse (12) angeordnet sind.

## Claims

1. Drive axle for electric motor driven vehicles having one electric motor disposed on the axle and having drive shafts (19) that are driven by the motor shaft (13) thereof, accompanied by the interposition of planetary gearing stages and which, accompanied by the respective interposition of a brake assembly (22) as well as a further planetary gearing (23), are connected with the output shafts (24) that carry the wheels disposed on the drive axle, **characterized in that** disposed on the axle are two separately operating asynchronous motors (10, 11) having a respective motor shaft (13) related thereto which asynchronous motors are controlled by common control means with regard to their operating performance, and each motor shaft (13) is respectively connected via an own planetary gear stage (15, 16, 17) with the drive shaft (19) that drives the following output shaft (24).

2. Drive axle according to claim 1, **characterized in that** each planetary gear stage (15, 16, 17) that is disposed between the motor shaft (13) and drive shaft (19) has a single-stage configuration.

3. Drive axle according to claim 1, **characterized in that** each planetary gearing stage (15, 16, 17) disposed between motor shaft (13) and drive shaft (19) has a multi-stage configuration.

4. Drive axle according to one of the claims 1 to 3, **characterized in that** the gearbox (14) of each planetary gearing stage (15, 16, 17) that is disposed between motor shaft (13) and drive shaft (19) is disposed in the interior of the housing (12) of the asynchronous motor (10, 11) and caries the bearings (20) for the motor shaft (13).

5. Drive axle according to claim 4, **characterized in that** the bearings (20) for the motor shaft (13) are embodied as bearings that accommodate radial and axial forces, and between the bearings (20) and a sun gear (15) that is disposed on the motor shaft (13) and is part of the planetary gearing stage, there is disposed a bushing (30) that is supported on both sides against the bearings (20) and the sun gear (15), and the sun gear (15) is fixed in position, via a fastening means (32) disposed on the free end of the motor shaft (13), against the bushing (30), and **in that** the sun gear (15), and the planet pinions (16) that mesh therewith, are embodied as a helical toothing having a force component that acts in the direction of the bearings (20).

6. Drive axle according to claim 5, **characterized in that** the sun gear (15) is supported directly against the bushing (30).

7. Drive axle according to claim 5, **characterized in that** a spacer disk (31) is disposed between bushing (30) and sun gear (15).

8. Drive axle according to one of the claims 5 to 7, **characterized in that** the fastening means (32) fixes the sun gear (15) with pre-stress against the bushing (30).

9. Drive axle according to one of the claims 5 to 7, **characterized in that** the sun gear (15) is disposed between the bushing (30) and the fastening means (32) with a slight axial play.

10. Drive axle according to one of the claims 1 to 9, **characterized in that** the lubrication of the bearing (20) of the motor shaft (13) is formed by the oil lubrication of the planetary gearing stage (15, 16, 17).

11. Drive axle according to one of the claims 1 to 9, **characterized in that** the bearing (20) of the motor shaft (13) is a grease-lubricated bearing.

12. Drive axle according to one of the claims 1 to 11, **characterized in that** both asynchronous motors (10, 11) are disposed in a common housing (12):

## Revendications

1. Essieu moteur pour véhicules entraînés par électromoteur comportant un électromoteur disposé sur l'essieu et des arbres d'entraînement (19) entraînés par l'arbre du moteur (13) par l'intermédiaire d'étages à engrenage planétaire et reliés par l'intermédiaire d'un dispositif de freinage (22) ainsi que par un autre engrenage planétaire (23) avec les arbres de sortie (24) supportant les roues logées sur l'essieu moteur **caractérisé en ce que** deux moteurs asynchrones (10, 11) munis de leurs arbres du moteur (13) respectifs, travaillant séparément et commandés en ce qui concerne leur comportement de travail par une commande commune, sont disposés sur l'essieu, chaque arbre du moteur (13) étant relié par son propre étage à engrenage planétaire (15, 16, 17) avec l'arbre d'entraînement (19) entraînant en aval l'arbre de sortie (24).

2. Essieu moteur selon la revendication 1 **caractérisé en ce que** chaque étage d'engrenage planétaire (15, 16, 17) placé entre l'arbre du moteur (13) et l'arbre d'entraînement (19) est configuré en mono-étage.

3. Essieu moteur selon la revendication 1 **caractérisé en ce que** chaque étage d'engrenage planétaire (15, 16, 17) placé entre l'arbre du moteur (13) et l'arbre d'entraînement (19) est configuré en plusieurs étages.

4. Essieu moteur selon l'une des revendications 1 à 3 **caractérisé en ce que** la boîte de vitesses (14) de chaque étage d'engrenage planétaire (15, 16, 17) placé entre l'arbre du moteur (13) et l'arbre d'entraînement (19) est placé à l'intérieur du carter (12) du moteur asynchrone (10, 11) et supporte les paliers (20) pour l'arbre du moteur (13).

5. Essieu moteur selon la revendication 4 **caractérisé en ce que** les paliers (20) pour l'arbre du moteur (13) sont conformés en paliers absorbant les forces radiales et axiales et qu'entre les paliers (20) et un pignon solaire (15) faisant partie de l'étage à engrenage planétaire disposé sur l'arbre du moteur (13) est placée une douille (30) qui s'appuie sur les deux côtés contre les paliers (20), et que le pignon solaire (15) est fixé contre la douille (30) à l'aide d'un moyen de fixation (32) situé sur l'extrémité libre de l'arbre du moteur (13) et **en ce que** le pignon solaire (15) et les roues planétaires (16) s'engrenant dans ce dernier sont conformés avec une denture hélicoïdale avec une composante de force agissant vers les paliers (20).

6. Essieu moteur selon la revendication 5 **caractérisé en ce que** le pignon solaire (15) s'appuie directement sur la douille (30).

7. Essieu moteur selon la revendication 5 **caractérisé en ce qu'**un disque intermédiaire (31) est placé entre la douille (30) et le pignon solaire (15).

8. Essieu moteur selon l'une des revendications 5 à 7, **caractérisé en ce que** le moyen de fixation (32) fixe le pignon solaire (15) avec une précontrainte contre la douille (30).

9. Essieu moteur selon l'une des revendications 5 à 7 **caractérisé en ce que** le pignon solaire (15) est placé entre la douille (30) et le moyen de fixation (32) avec un faible jeu axial.

10. Essieu moteur selon l'une des revendications 1 à 9 **caractérisé en ce que** la lubrification du palier (20) de l'arbre du moteur (13) est assuré par la lubrification à huile de l'étage à engrenage planétaire (15, 16, 17).

11. Essieu moteur selon l'une des revendications 1 à 9 **caractérisé en ce que** le palier (20) de l'arbre du moteur (13) est un palier lubrifié avec de la graisse.

12. Essieu moteur selon l'une des revendications 1 à 11 **caractérisé en ce que** les deux moteurs asynchrones (10, 11) sont disposés dans un carter (12) commun.
